(19) Europäisches Patentamt
European Patent Office
Office européen des brevets

(11) EP 0 786 487 B1

(12) EUROPÄISCHE PATENTSCHRIFT

(45) Veröffentlichungstag und Bekanntmachung des Hinweises auf die Patenterteilung:
**15.12.2004 Patentblatt 2004/51**

(51) Int Cl.[7]: **C08G 73/06**, C08G 69/10, C08G 73/10

(21) Anmeldenummer: **97100592.1**

(22) Anmeldetag: **16.01.1997**

# (54) Verfahren zur Herstellung von Polymeren mit wiederkehrenden Succinyl-Einheiten

Preparation process of polymers containing succinyl repeating units

Procédé de préparation de polymères à groupements succinyl répétitifs

(84) Benannte Vertragsstaaten:
**BE CH DE ES FR GB IE IT LI NL**

(30) Priorität: **29.01.1996 DE 19603053**

(43) Veröffentlichungstag der Anmeldung:
**30.07.1997 Patentblatt 1997/31**

(73) Patentinhaber: **Bayer Chemicals AG**
**51368 Leverkusen (DE)**

(72) Erfinder:
- **Groth, Torsten, Dr.**
  **51519 Odenthal (DE)**
- **Joentgen, Winfried, Dr.**
  **50769 Köln (DE)**
- **Menzel, Thomas, Dr.**
  **40723 Hilden (DE)**
- **Pirkl, Hans-Georg, Dr.**
  **51061 Köln (DE)**
- **Wagner, Paul, Dr.**
  **40597 Düsseldorf (DE)**
- **Weinschenck, Joergen**
  **47803 Krefeld (DE)**

(56) Entgegenhaltungen:
**EP-A- 0 085 033**
**EP-A- 0 612 784**
**EP-A- 0 625 531**
**EP-A- 0 693 516**
**WO-A-95/20617**
**DE-A- 4 305 368**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 786 487 B1

Printed by Jouve, 75001 PARIS (FR)

## Beschreibung

Die Erfindung betrifft ein Verfahren zur Herstellung von Polymeren mit wiederkehrenden Succinyl-Einheiten.

Die so hergestellten Polymere können durch organische und anorganische Basen zu den entsprechenden Derivaten hydrolysiert werden.

Die Herstellung von Succinyl-Einheiten enthaltenden Polymeren, insbesondere von Polyasparaginsäuren und Polysuccinimid, ist seit einigen Jahren Gegenstand intensiver Forschung.

US-A 4 839 461 (= EP-A 0 256 366) beschreibt die Herstellung von Polyasparaginsäure aus Maleinsäureanhydrid, Wasser und Ammoniak. Aus US-A 4 590 260 ist bekannt, dass Aminosäuren zusammen mit Derivaten der Äpfel-, Malein- und/oder Fumarsäure bei 100 bis 225°C polykondensierbar sind. Gemäß US-A 4 696 981 lassen sich zur Durchführung einer derartigen Reaktion Mikrowellen einsetzen.

US-A 5 288 783 beschreibt die Herstellung von Polyasparaginsäure aus Maleinsäure oder Fumarsäure, Wasser und Ammoniak bei Temperaturen von 190 bis 350°C und bei Temperaturen von 160 bis 200°C durch Extrusion. Das auf einem der beiden Verfahrenswegen hergestellte Polysuccinimid wird anschließend alkalisch zu Polyasparaginsäure hydrolysiert.

EP-A 0 625 531 beschreibt ein kontinuierliches Verfahren zur Herstellung von Polymeren aus monoethylenisch ungesättigten Säuren oder Anhydriden und einer stickstoffhaltigen Komponente, wobei ein Fluidisierungsmittel anwesend sein kann.

EP-A-0 612 784 beschreibt ein durchweg kontinuierlich betriebenes Verfahren zur Herstellung von Polysuccinimid und Polyasparaginsäure aus Maleinsäureanhydrid, Ammoniak und Wasser in Substanz oder gelöst in Wasser und Polymerisation im Zweiwellenextruder.

EP-A-1 085 033 beschreibt ein Verfahren zur Herstellung von Salzen der Polyasparapinsäure, wobei Maleinsäure und Ammoniak im Verhältnis 1:1-2.1 bei 170-350°C zu Polysuccinimid und dieses durch Hydrolyse zum gewünschten Salz umgesetzt werden.

Die vorliegende Erfindung betrifft ein Verfahren zur Herstellung von Polymeren mit wiederkehrenden Succinyl-Einheiten durch Umsetzung von A, einer ungesättigten $C_4$-Dicarbonsäure oder eines Derivates davon, mit B, einer Stickstoff liefernden Verbindung in einem ersten diskontinuierlichen Reaktionsschritt bei einer Temperatur zwischen 60 und 250°C und einer Verweilzeit zwischen 1 min und 20 Stunden unter Erhalt eines Reaktionsgemisches, enthaltend wenigstens ein niedermolekulares Reaktionsprodukt aus A und B und anschließende kontinuierliche Zuführung des Reaktionsgemisches in einen kontinuierlich betriebenen Reaktor, Behandlung des Reaktionsgemisches bei einer Temperatur von 140 bis 350°C unter Erhalt des Polymeren mit wiederkehrenden Succinyl-Einheiten und einem Molekulargewicht $M_w$ >1300 in einem zweiten Reaktionsschritt.

Bevorzugte Verbindungen A sind Maleinsäureanhydrid, Maleinsäure und Fumarsäure. Sie können einzeln oder in Mischung eingesetzt werden.

Bevorzugte Verbindungen B sind Ammoniak oder Ammoniak freisetzende Verbindungen, insbesondere Ammoniumsalze und Amide der Kohlensaure wie z.B. Ammoniumhydrogencarbonat, Diammoniumcarbonat, Harnstoff, Isoharnstoff (Ammoniumcyanat), Carbamidsäure oder Ammoniumcarbamid geeignet. Ebenfalls können auch andere organische und anorganische Ammoniumsalze eingesetzt werden. Diese Edukte können einzeln oder in Gemischen in Substanz oder Lösung eingesetzt werden. Falls als Edukt B Ammoniak eingesetzt wird, kann dieses auch gasförmig verwendet werden.

Die Herstellung der Reaktionsgemische erfolgt vorzugsweise entweder durch die Umsetzung von Maleinsäureanhydrid mit Ammoniak oder Ammoniak-Derivaten oder durch die Umsetzung von Maleinsäureanhydrid zunächst mit Wasser zu Maleinsaure und anschließender Umsetzung mit Ammoniak und Ammoniak-Derivaten.

In einer bevorzugten Ausführungsform wird Maleinsäureanhydrid mit Ammoniak oder Ammoniak-Derivaten zur Reaktion gebracht. Dabei können geeignete Lösungsmittel verwendet werden. Wasser ist vorzugsweise einzusetzen.

Je nach Ausführungsbedingungen entstehen Maleinsäureanhydrid-Folgederivate wie z.B. Maleinamidsäure, Maleinamidsäureammoniumsalz, Maleinsäuremonoammoniumsalz, Maleinsäurediammoniumsalz, Asparaginsäure, Asparaginsäuremonoammoniumsalz, Asparaginsäurediammoniumsalz, Iminodisuccinat-mono-, di-, tri-, tetraammoniumsalz, Asparagin, Asparaginammoniumsalz, Iminodisuccinätdiamiddiammoniumsalz und daraus resultierende Kondensationsprodukte. In Gegenwart von Wasser werden auch durch die Hydrolyse der Säureamide die entsprechenden Ammoniumsalze gebildet.

In einer weiteren bevorzugten Ausführungsform wird Maleinsäureanhydrid zunächst mit Wasser zu Maleinsäure umgesetzt, die dann in wässriger Lösung mit Ammoniak oder Ammoniak-Derivaten zu einem Reaktionsgemisch abreagiert.

Erfindungsgemäß können auch Reaktionsgemische gebildet werden, die zusätzlich die entsprechenden Fumarsäure- und Äpfelsäure-Derivate enthalten können. Ferner können alle Aminogruppen-haltigen Komponenten mit den übrigen Carbonsäure-haltigen Komponenten in kondensierter Form, unter Bildung von Peptidbindungen, vorkommen.

Maleinsäureanhydrid bzw. Derivate davon werden als Edukt A vorzugsweise in solchen Mengen eingesetzt, dass das molare Verhältnis von Stickstoff im Edukt B relativ zum Maleinsäureanhydrid oder einem Derivat davon im Edukt A zwischen 0,1 und 25, bevorzugt zwischen 0,5 und 8 und ganz besonders bevorzugt zwischen 0,9 und 4, liegt.

Der erste diskontinuierliche Reaktionsschritt ist eine schnelle, stark exotherme Reaktion, in deren Folge bei unspezifischer Reaktionsführung, z.B. durch starke Temperaturerhöhung, Produktschädigungen entstehen können. Erfindungungsgemäß kann aber eine gezielte Temperaturführung gewährleistet werden bei vorzugsweise konstanten Reaktionsbedingungen, um ein gewünschtes Reaktionsgemisch herzustellen. Als Reaktionsbedingungen werden Temperaturen zwischen 60 und 250°C gewählt, insbesondere 70 bis 170°C und besonders bevorzugt 80 bis 150°C. Die Verweilzeiten variieren zwischen 1 min und 20 Stunden, sie liegen bevorzugt bei 2 min bis 3 Stunden. Die Drucke stellen sich spezifisch in Abhängigkeit von der Reaktionsführung bzw. der Temperatur ein. Gegebenenfalls kann der Druck durch Zusatz von Inertgas eingestellt werden.

Zur Durchführung des ersten diskontinuierlichen Reaktionsschrittes sind insbesondere alle Reaktoren geeignet, die eine gute Regelung der Reaktionsbedingungen zulassen. Die Reaktion wird in diskontinuierlich betriebenen Apparaten betrieben, die eine genügende Verweilzeit zur Verfügung stellen können. Dabei kann man das Reaktionsvolumen zur Verdünnung der Eduktströme einsetzen und damit die Reaktionsgeschwindigkeit herabsetzen und trotzdem eine genügende Reaktionstemperatur realisieren, die die Bildung der gewünschten Zwischenprodukte ermöglicht. Bevorzugte Reaktoren sind alle Arten von Rührkesselreaktoren mit und ohne Umpumpungskreislauf, Rührkesselkaskaden, Schlaufenreaktoren, Rohrreaktoren mit Rückführung etc. Im Falle der Verwendung von gasförmigem Ammoniak sind als Reaktorbeispiele zu nennen: Blasensäulen, begaste Rührkessel und Airlift-Schlaufenreaktoren.

Bevorzugt wird der erste diskontinuierliche Reaktionsschritt in einem diskontinuierlichen Rührkessel durchgeführt. Dabei kann eines der Edukte A bzw. B gegebenenfalls in einem Lösungsmittel vorgelegt werden und das andere Edukt zugegeben werden. In einer anderen Ausführungsform werden die Edukte A und B gleichzeitig einem diskontinuierlichen Reaktor zugeführt (Semi-Batch-Fahrweise). Gegebenenfalls werden die Edukte dem diskontinuierlichen Reaktor vorgemischt zugeführt. Dabei können alle Arten von Mischern eingesetzt werden. Beispielsweise können dies Strahlmischer wie z.B. Düsenmischer, statische Mischer oder dynamische Mischer sein.

Im Falle der Verwendung von gasförmigem Ammoniak wird dieser vorzugsweise über geeignete Gasverteiler dem Reaktor zugeführt. Denkbar sind alle Arten von statischen (z.B. Lochplatte, Sinterplatte, Ringbegaser, Begasungslanze etc.) und dynamischen Begasern (z.B. Injektoren, Ejektoren, Begasungsrührer etc.). Die Zufuhr des gasförmigen Ammoniaks kann auch in einem Umpumpkreislauf unter Verwendung geeigneter In-line Mischer (Düsen, Statik-Mischer, Injektoren, Ejektoren) erfolgen.

Ist die Dosierung in den Reaktor abgeschlossen, wird das Reaktionsgemisch auf die gewünschte Reaktionstemperatur aufgeheizt und eine bestimmte Zeit auf Reaktionstemperatur gehalten werden. Dabei wird der Reaktor in der Regel unter Druck gefahren. Dadurch wird verhindert, dass Lösungsmittel und/oder gegebenenfalls entstehendes Reaktionswasser aus dem Reaktionsgemisch verdampft. In einer anderen Ausführungsform wird Lösungsmittel und/oder gegebenenfalls entstehendes Reaktionswasser durch Steuerung des Druckes gezielt verdampft, um die Temperatur und/oder die Eigenschaften des Reaktionsgemisches gezielt zu steuern.

Die im ersten diskontinuierlichen Reaktionsschritt erhaltenen komplexen Reaktionsgemische sind noch nicht zur Herstellung von Polymeren mit wiederkehrenden Succinyl-Einheiten beschrieben worden. Sie unterscheiden sich von den bekannten Ausgangsprodukten zur Herstellung von Polyasparaginsäure durch ihre komplexe Zusammensetzung. Vor allem ist die zum Aufbau von Polypeptiden notwendige Amino-Gruppe der Asparaginsäure in den Iminodisuccinaten durch die Addition einer weiteren $C_4$-Einheit blockiert. Daher war es nicht offensichtlich, dass derartige Verbindungen oder Gemische in denen diese Verbindungen enthalten sind, zum Aufbau von Polymeren geeignet sind.

Das im ersten diskontinuierlichen Reaktionsschritt erzeugte Reaktionsgemisch, das auch Mischungen verschiedener zuvor hergestellter Reaktionsgemische bzw. gegebenenfalls Mischungen eines Reaktionsgemisches oder verschiedener Reaktionsgemische mit den Edukten A und/oder B umfaßt, wird im zweiten Reaktionsschritt in einem geeigneten Apparat zum gewünschten Produkt thermisch polymerisiert. Dabei richtet sich die Wahl der Reaktionsgemische nach der erwünschten Produktqualität für die verschiedenen Anwendungsfelder der Produkte. In einer bevorzugten Ausführungsform werden mehrere diskontinuierliche Reaktoren für den ersten Reaktionsschritt parallel mit dem Reaktor für die weitergehende thermische Polymerisation in einer Anlage betrieben. Dadurch wird eine hohe Flexibilität der Produktionsanlage erzielt.

Für die thermische Polymerisation eignen sich vorzugsweise alle Apparate, die bei einer engen Verweilzeitverteilung der viskos-flüssigen Phase die notwendige Mindestverweilzeit zur Polymerisation bereitstellen, die nötige Temperaturführung und gleichzeitig eine zumindest partielle Verdampfung des Lösungsmittels, insbesondere des Wassers, sowie des bei der Reaktion gebildeten Wassers ermöglichen.

Weiterhin sollte zum Aufbau von Polymerketten mit gleichmäßiger Kettenlänge die thermische Polymerisation möglichst in für alle Moleküle gleicher Verweilzeit unter möglichst identischen Reaktionsbedingungen durchgeführt werden. Geeignete Reaktoren mit engem Verweilzeitspektrum sind in der einschlägigen Literatur bekannt (z.B. Ullmann: Encyclopedia of Industrial Chemistry, 1992, Vol. B4, 97-120).

Bevorzugte Vorrichtungen zur thermischen Polymerisation sind also alle Apparate, die eine definierte Verweilzeit mit einer engen Verweilzeitverteilung für die feste oder hochviskosflüssige Phase aufweisen und gleichzeitig eine gute Temperierung durch ein zumindest partielles Verdampfen des Lösungsmittels und/oder des bei der Polymerisation gebildeten Reaktionswassers ermöglichen. Solche bevorzugten Vorrichtungen können beispielsweise einzeln oder in Kombination sein.

a) Verweilrohre, siehe
O. Levenspiel
The Chemical Reactor Omnibook
OSU Book Stores Inc. Corrallis Oregon
Jan. 1989, Chap. 3-5

b) Hochviskosreaktoren mit beweglichen Einbauten vorzugsweise Schnecke, List-Reaktor, wie sie in EP-A 0 612 784 A1 beschrieben sind.

c) Trockner (z.B. Schaufeltrockner, Sprühtrockner), vorzugsweise wie sie in DE-A-4 425 952 beschrieben sind.

d) Rührkesselkaskade, insbesondere wie sie von Levenspiel (s.o.) beschrieben sind.

e) Dünnschichtverdampfer, insbesondere wie sie von W.L. McCade, J.C. Smith, Unit operations of chemical engineering, McGrace Hill, 2. Auflage, 1967, Kap. 16, S. 445, beschrieben sind.

f) Hochviskosreaktoren ohne bewegliche Einbauten (z.B. Mehrphasen-Wendelrohr-Reaktoren (MPWR)), insbesondere wie sie in DT 1 667 051, DE 219 967, beschrieben sind.

g) Mikrowellenreaktoren, insbesondere wie sie in US-A 4 696 981 beschrieben sind.

Besonders gute Ergebnisse werden erzielt, wenn ein Rohrreaktor oder ein MPWR verwendet worden ist. Diese Apparate haben sich zur Durchführung des erfindungsgemäßen Verfahrens besonders bewährt.

Zur Kontrolle der Reaktortemperatur der durchgeführten Reaktionen kann eine vollständige oder auch partielle Kreisführung des Reaktionsgemisches in Kombination mit Wärmeab- und -zufuhr erfolgen. Für eine solche Reaktionsführung eignen sich insbesondere alle Reaktoren obengenannter Bauart mit Rückführung des Reaktionsgemisches in Kombination mit Wärmeab- und -zufuhr sowie alle Schlaufenreaktoren.

In einer bevorzugten Ausführungsform kann zur gewünschten Reaktionsführung ein im ersten diskontinuierlichen Reaktionsschritt erzeugtes Reaktionsgemisch oder Mischungen verschiedener zuvor hergestellter Reaktionsgemische bzw. gegebenenfalls Mischungen eines Reaktionsgemisches oder verschiedener Prepolymere mit den Edukten A und/oder B oder eine Eduktkomponente A und/oder B oder ein Lösungsmittel an mehreren Stellen in geeigneter Weise entlang des Rohr- bzw. Mehrphasenwendelrohrreaktors eindosiert werden, so dass ein optimales Temperaturprofil und optimale Produkteigenschaften erzielt werden können. Die Zahl der Dosierstellen liegt bevorzugt im Bereich von bis zu 10. Die Art der Zuspeisung wird so gewählt, dass eine gute Vermischung mit der Reaktionslösung erfolgt.

Das im ersten diskontinuierlichen Reaktionsschritt erzeugte Prepolymer oder Mischungen verschiedener zuvor hergestellter Prepolymere bzw. gegebenenfalls Mischungen eines Prepolymers oder verschiedener Prepolymere mit den Edukten A und/oder B werden je nach den verwendeten Stoffen bei Temperaturen zwischen 50°C und 270°C in den Polymerisationsreaktor eingespeist. Die Wärmeab- oder -zufuhr am Reaktor wird so gesteuert, dass der zweite Reaktionsschritt dann je nach Art und Konzentration der verwendeten Stoffe bei 120 bis 350°C, bevorzugt bei 140 bis 300°C und besonders bevorzugt bei 140 bis 270°C stattfinden kann. Vorteilhaft wird die Temperatur über den Druck im Reaktor und die Mengenströme des zugeführten im ersten Reaktionsschritt erzeugten Prepolymers oder Mischungen verschiedener zuvor hergestellter Prepolymere bzw. gegebenenfalls Mischungen eines Prepolymers oder verschiedener Prepolymere mit den Edukten A und/oder B, sowie den Gehalt an Lösungsmittel eingestellt. Weiterhin können Produkt-Edukt-Bereiche mit unterschiedlichen Temperaturen im Reaktionssystem zwecks Wärmeaustausch direkt oder indirekt in Kontakt gebracht werden.

Die Verweilzeiten in dem für den 2. Reaktionsschritt zu verwendenden Reaktorsystem betragen bis zu 120 Minuten. Bevorzugt sind Verweilzeiten von bis zu 30 Minuten. Besonders bevorzugt sind mit steigender Temperatur abnehmende Verweilzeiten, d.h. bei Temperaturen zwischen 120 und 200°C weniger als 30 Minuten; bei Temperaturen zwischen 200 bis 250°C weniger als 10 Minuten, bei Temperaturen zwischen 250 bis 300°C weniger als 5 Minuten; bei Temperaturen oberhalb von 300°C weniger als 2 Minuten. Die Verweilzeit wird vorzugsweise so gewählt, dass eine

praktisch vollständige Polymerisation erfolgt. Die erhaltenen Reaktionsprodukte sind je nach Wasser- bzw. Lösungsmittelgehalt wegen der freiwerdenden Reaktionsenthalpie sowie Wärmeab- bzw. -zufuhr heiße Lösungen oder lösungsmittelhaltige bzw. wasserhaltige Schmelzen.

Die nach dem erfindungsgemäßen Verfahren hergestellten Polymere weisen wiederkehrende Succinyl-Einheiten mit wenigstens einer der folgenden Strukturen auf:

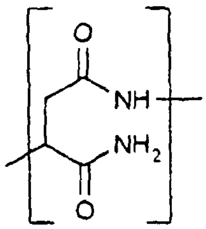

1

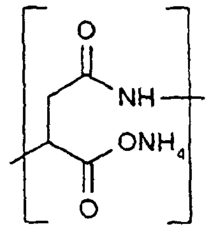

2

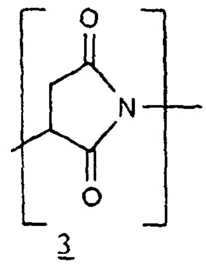

3 ,

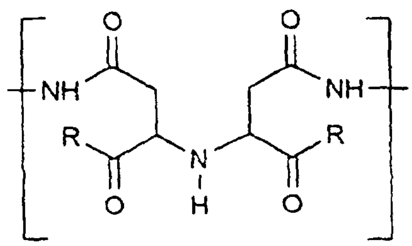

4

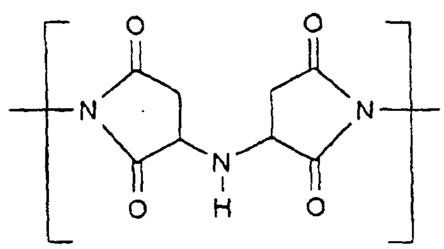

5

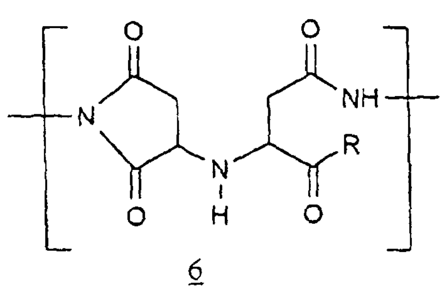

6

R = $ONH_4$, $NH_2$ oder die Strukturen 1, 2, 3, 4, 5 und 6.

Im allgemeinen weisen die Polymere hauptsächlich wiederkehrende Einheiten 1, 2 und 3 auf.

Zusätzlich können durch geeignete Reaktionsführung und Wahl der Edukte weitere wiederkehrende Einheiten enthalten sein, z.B.

a) Äpfelsäure-Einheiten der Formel

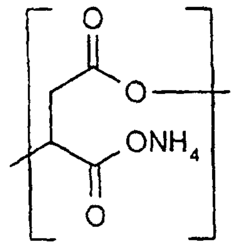

und

b) Maleinsäure- und Fumarsäure-Einheiten der Formel

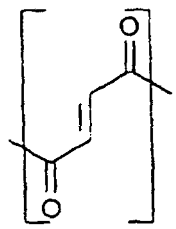

und

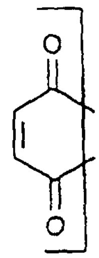

Die Analyse der chemischen Struktur erfolgt vorzugsweise mit $^{13}C$-NMR, FT-IR und nach Totalhydrolyse mit HPLC, GC und GC/MS.

Gemäß einer Weiterentwicklung der Erfindung kann die Struktur des erhaltenen Polysuccinimides durch das stöchiometrische Verhältnis der Edukte beeinflußt werden.

Die Polymerisationsprodukte können solvolysiert werden. Geeignete Reaktionspartner sind Alkali- und Erdalkalihydroxide oder -carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Bevorzugt ist dabei eine Hydrolyse bei einem pH-Wert von 7 bis 12.

Die erhaltenen Produkte enthalten wiederkehrende Asparaginsäure-Einheiten, die in Form der freien Säure folgenden Formeln entsprechen:

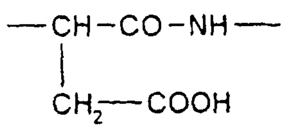

α-Form

und

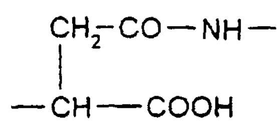

ß-Form

Wenn das Polymer ganz oder im wesentlichen aus diesen wiederkehrenden Einheiten aufgebaut ist, handelt es sich also um eine Polyasparaginsäure.

Im allgemeinen liegt der Anteil der β-Form bei mehr als 50 %, bevorzugt bei mehr als 70 %.

Die Temperatur bei der Hydrolyse liegt geeigneterweise in einem Bereich einschließlich bis zum Siedepunkt der Polymer-Suspension und bevorzugt bei 20 bis 150°C. Die Hydrolyse wird gegebenenfalls unter Druck durchgeführt. Hierbei wird in der Regel ein Salz erhalten.

Es ist jedoch auch möglich, durch rein wäßrige Hydrolyse oder Behandlung des Salzes mit Säuren oder sauren Ionenaustauschern freie Säuren zu erhalten.

In Abhängigkeit von den Reaktionsbedingungen, beispielsweise Verweilzeit und Temperatur der Polymerisation können unterschiedliche Kettenlängen bzw. Molekulargewichte eingestellt werden. Nach gelpermeationschromatographischen Analysen werden insbesondere Molekulargewichte von Mw = 1.300 bis 10.000, bevorzugt 1.300 bis 5.000, besonders bevorzugt 1.300 bis 4.500, erhalten.

Die erfindungsgemäß hergestellten Polymere können in nicht hydrolisierter, vorzugsweise in hydrolisierter

Form, als Zusatz in phosphatarmen und phosphatfreien Wasch- und Reinigungsmitteln verwendet werden. Sie sind Builder für Waschmittel und bewirken während des Waschvorgangs eine Verminderung der Inkrustierung und Vergrauung auf dem gewaschenen Textilgut.

Weiterhin sind die erfindungsgemäß hergestellten Polymere als Wasserbehandlungsmittel geeignet. Sie können dem Wasser in Kuhlkreislaufen, Verdampfern oder Meerwasserentsalzungsanlagen zugesetzt werden. Außerdem können sie als Belagsverhinderer bei der Eindampfung von Zuckersaft eingesetzt werden.

Sie eignen sich weiter als Dispergiermittel, Bleichmittelstabilisator und Korrosionsinhibitor, zum Dispergieren von organischen und anorganischen Pigmenten, als Additiv in Düngemitteln und als Mahlhilfsmittel.

Aufgrund ihrer guten Dispergiereigenschaften eignen sich die erfindungsgemäßen Polymere auch als Dispergiermittel für anorganische Pigmente und zur Herstellung hochkonzentrierter Feststoffdispersionen (Slurries) von z.B. Erdalkalihydroxiden wie z.B. $Ca(OH)_2$ und $Mg(OH)_2$ oder auch ihren Oxiden und Carbonaten, sowie als Zusatz für Zement bzw. als Zementverflüssiger.

Die Erfindung betrifft weiterhin ein Verfahren zur Herstellung modifizierter Polymere, bei dem man

a) 0,1 bis 99,9 mol-% der Edukte A und B und

b) 99,9 bis 0,1 mol-%
an Fettsäure, Fettsäureamiden, mehrbasischen Carbonsäuren, deren Anhydriden und Amiden, mehrbasischen Hydroxycarbonsäuren, deren Anhydriden und Amiden, Polyhydroxycarbonsäuren, Aminocarbonsäuren, Zuckercarbonsäuren, Alkoholen, Polyolen, Aminen, Polyaminen, alkoxylierten Alkoholen und Aminen, Aminoalkoholen, Aminozuckern, Kohlehydraten, ethylenisch ungesättigten Mono- und Polycarbonsäuren sowie deren Anhydriden und Amiden, Proteinhydrolysaten z.B. Mais-Proteinhydrolysat, Soja-Proteinhydrolysat, Aminosulfonsäuren und Aminophosphonsäuren nach dem erfindungsgemäßen Verfahren zur Reaktion bringt.

Die unter a) beschriebenen Edukte A und B werden in der erfindungsgemäßen Polymerisation zu 0,1 bis 99,9 mol-%, vorzugsweise zu 60 bis 99,9 mol-% und besonders bevorzugt zu 75 bis 99,9 mol-%, eingesetzt

Als Komponente (b) der Polymerisate kommen sämtliche Fettsäuren in Betracht. Sie können gesättigt oder ethylenisch ungesättigt sein. Beispiele sind Ameisensäure, Essigsäure, Propionsaure, Buttersäure, Laurinsäure, Palmitinsäure, Stearinsäure, Ölsäure, Linolsäure, Linolensäure, Sorbinsäure, Myristinsäure, Undecansaure sowie alle naturlich vorkommenden Fettsäuregemische, beispielsweise $C_{12}/C_{14}$- oder $C_{16}/C_{18}$-Fettsäuremischungen. Als ungesättigte Fettsäuren können auch Acrylsäure und Methacrylsäure eingesetzt werden.

Weiterhin können diese Säuren auch in Form ihrer Amide verwendet werden. Als mehrbasische Carbonsäuren können beispielsweise Oxalsäure, Bernsteinsäure, Glutarsäure, Adipinsäure, Malonsäure, Korksäure, Aconitsäure, Itaconsäure, Sulfobernsteinsäure, Alkenylbernsteinsäure ($C_1$-$C_{26}$), 1,2,3-Propantricarbonsäure, Butantetracarbonsäure, Furandicarbonsäure, Pyridindicarbonsäure eingesetzt werden. Ebenfalls können die Anhydride von mehrbasischen Carbonsäuren z.B. Bernsteinsäureanhydrid, Itaconsäureanhydrid, Aconitsäure-anhydrid und Phthalsäureanhydrid verwendet werden. Weiter kommen als Komponente (b) auch mehrbasische Hydroxycarbonsäuren und Polyhydroxycarbonsäuren in Betracht. Mehrbasische Hydroxycarbonsäuren tragen neben mindestens einer Hydroxygruppe mindestens zwei oder mehr Carboxylgruppen. Als Beispiele sind hier Äpfelsäure, Weinsäure, Traubensäure, Citronensäure und Isocitronensäure genannt.

Einbasische Polyhydroxycarbonsäuren tragen neben einer Carbonsäuregruppe zwei oder mehr Hydroxygruppen, z.B. Glycerinsäure, Dimethylolpropionsäure, Dimethylolbuttersäure, Gluconsäure. Außerdem sind einwertige Alkohole mit beispielsweise 1 bis 22 C-Atomen wie z.B. Methanol, Ethanol, n-Propanol, i-Propanol, Butanol, Pentanol, Hexanol, Octanol, Laurylalkohol, Stearylalkohol etc. geeignet. Die Alkohole können auch gegebenenfalls eine Doppelbindung aufweisen, wie Allylalkohol oder Oleylalkohol. Weiterhin können diese Alkohole alkoxyliert sein, beispielsweise mit Ethylenoxid oder Propylenoxid. Von technischem Interesse sind vor allem die Addukte von 3 bis 50 mol Ethylenoxid an Fettalkohole oder Oxoalkohole. Weiterhin können als Komponente (b) Polyole entweder gesättigt oder ungesättigt eingesetzt werden, wie z.B. Ethylenglykol, Propylenglykol, Butandiol, Butendiol, Glycerin, Trimethylolpropan, Pentaaerythrit, Sorbit, Neopentylglykol sowie alkoxylierte Polyole wie Polyethylenglykole, Polypropylenglykole, ethoxyliertes Trimethylolpropan, Glycerin oder Pentaerythrit mit Molekulargewichten bis zu 6.000. Des weiteren eignen sich als Comonomer (b) auch Amine wie $C_1$-$C_{22}$-Alkylamine, z.B. Methylamin, Ethylamin, Propylamin, Butylamin, Cyclohexylamin, Octylamin, Isooctylamin (Ethylhexylamin), Stearylamin, Allylamin, Oleylamin, Ethylendiamin, Diethylentriamin, Hexamethylendiamin, Piperazin, Diaminobutan, Dimethylamin, Diethylamin, Hydroxylamin, Hydrazin, Ethanolamin, Diethanolamin, Aminopropandiol, sowie Polyalkylenaminen wie Polyethylenamin mit Molekulargewichten bis 6.000. Die Amine können auch alkoxyliert sein, z.B. die Anlagerungsprodukte von 3 bis 30 mol Ethylenoxid an Fettamine wie Oleylamin, Palmitylamin, oder Stearylamin. Weiterhin sind auch Aminozucker wie Aminosorbit oder Chitosamin geeignet. Außerdem sind als Komponente (b) Kohlenhydrate wie Glucose, Saccharose, Maltose, Dextrine, Stärke oder Zuckercarbonsäuren, beispielsweise Schleimsäure, Gluconsäure, Glucuronsäure, Glucarsäure geeignet. Außerdem

können Aminosäuren, Proteinogene wie Glycin, Alanin, Glutaminsäure und Lysin oder nicht Proteinogene wie 4-Aminobuttersäure, Diaminobernsteinsäure, 11-Aminoundecansäure und 6-Aminocapronsäure als Komponente (b) eingesetzt werden. Die Verbindungen der Komponente (b) werden in Mengen von 0,1 bis 99,9 mol-%, vorzugsweise 0,1 bis 40 mol-%, besonders bevorzugt 0,1 bis 25 mol-% zur Polymerisation eingesetzt. Man kann eine einzige Verbindung der Komponente (b) oder Mischungen aus zwei oder mehreren Verbindungen von (b) einsetzen. Die Verbindungen der Komponente (b) können im gewünschten Verhältnis mit einem der Hauptedukte (a) vermischt werden und als Gemisch in die erste Reaktionsstufe eingesetzt werden.

In einer anderen Ausführungsform werden die Verbindungen der Komponente (b) dem Reaktionsgemisch bei Durchführung des zweiten Reaktionsschrittes beim Eintritt in den Reaktor zur thermischen Polymerisation zugesetzt. Ebenfalls ist es möglich die Verbindungen der Komponente (b) simultan mit den Hauptedukten (a) beim ersten Reaktionsschritt einzudosieren.

Werden als Komponente (b) monofunktionelle Verbindungen wie Alkohole, Amine, Fettsäuren oder Fettsäureamide verwendet, so werden sie am Kettenende eingebaut. Sie wirken als Kettenabbrecher und erniedrigen das Molekulargewicht. Mehrfunktionelle Verbindungen der Komponente (b) können im fertigen Polymer sowohl am Kettenende als auch statistisch verteilt über die Polymerkette eingebaut sein.

Die Rohpolymerisate können durch übliche Aufarbeitungsmethoden beispielsweise durch Extraktion mit Wasser und 1-n-Salzsäure oder durch Membranfiltration von monomeren Anteilen befreit werden. Die Analyse der Copolymere erfolgt durch $^{13}C$- und $^{15}N$-NMR-Spektroskopie, FT-IR-Spektroskopie und nach Totalhydrolyse mit HPLC, GC und GC-MS

Die modifizierten Polymere werden aus den Polysuccinimiden, vorzugsweise durch wäßrige Hydrolyse bei 20°C bis 150°C und pH 7 bis 12, gegebenenfalls unter Druck hergestellt. Diese Reaktion läßt sich jedoch auch bei Temperaturen außerhalb des angegebenen Temperaturbereichs und bei anderen pH-Werten durchführen. Geeignete Basen sind Alkali- und Erdalkalihydroxide oder -Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc. Man erhält teilweise oder vollständig neutralisierte Copolymerisate, die 0,1 bis 99,9 mol-% Asparaginsäure und 99,9 bis 0,1 mol-% von mindestens einer Verbindung (b) einpolymerisiert enthalten.

Werden primäre Amine oder primäre Aminogruppen tragende Basen zur Hydrolyse verwendet, so können die entstehenden Aminsalze durch Dehydratisierung in die entsprechenden Amide überführt werden. Die Wasserabspaltung kann durch Tempern bei Temperaturen von 30°C bis 250°C, gegebenenfalls unterstützt durch Vakuum, erfolgen.

Die erfindungsgemäßen modifizierten Polymere können als Zusatz in phosphatarmen und phosphatfreien Wasch- und Reinigungsmitteln verwendet werden. Die Polymerisate sind Builder für Waschmittel und bewirken während des Waschvorgangs eine Verminderung der Inkrustierung und Vergrauung auf dem gewaschenen Textilgut.

Weiterhin sind die erfindungsgemäßen modifizierten Polymere als Wasserbehandlungsmittel geeignet. Sie können dem Wasser in Kühlkreisläufen, Verdampfern oder Meerwasserentsalzungsanlagen zugesetzt werden. Außerdem können sie als Belagsverhinderer bei der Eindampfung von Zuckersaft eingesetzt werden.

Aufgrund ihrer guten Dispergiereigenschaften eignen sich die erfindungsgemäßen modifizierten Polymere auch als Dispergiermittel für anorganische Pigmente und zur Herstellung hochkonzentrierter Feststoffdispersionen (Slurries) von z.B Erdalkalihydroxiden wie z.B. $Ca(OH)_2$ und $Mg(OH)_2$, oder auch ihren Oxiden und Carbonaten, sowie als Zusatz für Zement bzw. als Zementverflüssiger

Im folgenden wird die Erfindung anhand von Ausführungsbeispielen näher erlautert.

## Beispiele

Polymere mit wiederkehrenden Succinyl-Einheiten wurden wie folgt erhalten:

Die verwendeten Abkürzungen bedeuten

MS Maleinsäure
PAS Polyasparaginsäure
MSA Maleinsäureanhydrid

## Beispiel 1

1.1 Herstellung einer 74,5 gew.-%igen Maleinsäure $(NH_4)_{1,7}$-Salz-Lösung

In einem Rührkessel werden 51,7 kg Wasser vorgelegt und auf 60°C erwärmt. 75,0 kg ≙ 0,765 kmol Maleinsäureanhydrid werden portionsweise hinzugegeben. Die Temperatur wird auf 80°C erhöht. Danach werden 22,1

kg $\hat{=}$ 1,3 kmol Ammoniak-Gas hinzugegeben. Dabei wird die Temperatur bis zum Ende der Ammoniak-Dosierung auf 100°C angehoben. Es werden 148,8 kg einer 74,5 gew.-%igen $MS(NH_4)_{1,7}$-Salz-Lösung erhalten.

1.2 Temperung der Lösung

Die erhaltene Lösung wird 16 h bei 100°C getempert.

1.3 Polymerisation der getemperten Lösung

Die getemperte Lösung wird mit ca. 21 kg/h in ein beheiztes Wendelrohr von 58 m Länge und 15 mm Querschnitt gepumpt. Die Polymerisation erfolgt dort bei ca. 190-200°C. Dabei kann das Lösungs- und Reaktionswasser zu einem großen Teil verdampfen.

Am Ende des Rohres wird das polymere Rohprodukt durch die sich im Wendelrohr individuell bildende Strömung ohne Zwangsförderung ausgetragen. Das heiße Rohprodukt wird in einem angeschlossenen Kessel verwassert. Die Analyse zeigt folgende Zusammensetzung bezogen auf Kohlenstoff ($C_4$-Einheiten): Gesamt-Stickstoff (N): 177 % d.Th.

1.4 Hydrolyse zum Polyasparaginsaure-Na-Salz

Die für eine vollständige Hydrolyse der Carboxylgruppen notwendige Menge an Natronlauge wird durch die Verseifungszahl (VSZ) ermittelt. Durch die Bestimmungsmethode werden Peptid-Bindungen nicht hydrolysiert. Die VSZ für das erhaltene Rohprodukt beträgt 3.08 mmol NaOH/g Rohprodukt-Lösung.

Die Hydrolyse wird mit Natronlauge bei 130°C, 3 h unter Druck durchgeführt Der freigesetzte Ammoniak wird anschließend abdestilliert.

1.5 Analyse der PAS-Na-Salzlösung

Die erhaltene PAS-Na-Salz-Lösung zeigt einen Gehalt von 30 % aus Kohlenstoff. Die Bestimmung des Molekulargewichts durch Gelpermeationschromatographie (GPC) erbringt ein Gewichtsmittelwert $M_w$ von 1390. Die Bestimmung der Calciumcarbonatdispergierkapazität bei 25°C, pH 11, erbringt einen CCK-Wert von 22 mg Ca $CO_3$/g PAS-Na-Salz. Der ZnO-Gehalt einer wässrigen Dispersion von 10 g ZnO auf 200 ml mit Wasser aufgefüllt, zeigt nach 2 h bei einer PAS-Na-Salz-Menge von 20 mg 67 % d.Th., bei 50 mg 74 % d.Th. und bei 100 mg Einsatzmenge 64 % d.Th.

Die Daten zeigen, daß durch die Polymerisation einer getemperten MS-$NH_4$-Salz-Lösung, die eine heterogene Zusammensetzung aufweist, ein Polyasparaginsäure-Na-Salz erhalten werden kann, das dispergierende und sequestriende Eigenschaften besitzt.

**Beispiel 2**

Die getemperte Lösung aus Beispiel 1 wird wiederum mit einer Menge von 21 kg/h zur Polymerisation eingesetzt. Die Reaktionstemperatur beträgt in dem 58 m Wendelrohrreaktor 200 bis 210°C. Die Analyse des in Wasser eingeleiteten Rohprodukts zeigt folgende Zusammensetzung: Gesamt N 177 % d.Th. Mit einer VSZ von 3.46 mmol NaOH/g PAS-Rohprodukt-Lösung wird die Hydrolyse entsprechend durchgeführt. Die 24 gew.-%ige PAS-Na-Salz-Lösung zeigt folgende Analysenwerte und Eigenschaften:

$M_w$ (aus GPC) = 1690; CCDK = 35 mg $CaCO_3$/g PAS-Na-Salz; ZnO-Gehalt einer wäßrigen Dispersion bei 20°C, pH 9,5 = 71 % d.Th. bei 20 mg PAS-Na-Salz-Einsatz, = 76 % d.Th. bei 50 mg PAS-Na-Salz, = 78 % d.Th. bei 100 mg PAS-Na-Salz und = 73 % d.Th. bei 200 mg PAS-Na-Salz.

**Beispiel 3**

3.1. Herstellung einer 73,6 %igen Maleinsäure $(NH_4)_{1,3}$-Salz-Lösung

Die Vorgehensweise ist wie im Beispiel 1.1. Eingesetzt wurden nun 51,7 kg Wasser, 75 kg MSA und 16,9 kg Ammoniak-Gas. Es wurden 143,6 kg Lösung erhalten.

3.2 Temperung der Lösung

Die Lösung wird 5 h bei 100°C getempert.

3.3 Polymerisation der getemperten Lösung

Die getemperte Lösung wird mit 20 kg/h kontinuierlich in ein beheiztes 58 m Wendelrohr gepumpt. Die Polymerisation erfolgt überwiegend (auf Grund des sich einstellenden Temperaturverlaufs) bei Temperaturen von

185-200°C. Das in Wasser eingeleitete Rohprodukt zeigt folgenden N-Gehalt. Gesamt-N = 139 % d.Th.

3.4 Hydrolyse von Polyasparaginsaure-Na-Salz

Die VSZ für das PAS-Rohprodukt betrug 3.22 mmol NaOH/g. Nach der Hydrolyse bei 130°C, 3 h wird der freigesetzte Ammoniak abdestilliert. Die nahezu geruchsfreie Lösung wird analysiert.

3.5 Analyse der PAS-Na-Salz-Lösung

Die PAS-Na-Salz-Lösung zeigt einen Gehalt von 33 Gew.-% aus Kohlenstoff. Gesamt-N = 83 % d.Th. $M_w$ aus GPC = 1790; der ZnO-Gehalt einer wäßrigen Dispersion beträgt beim Einsatz von 20, 50, 100 und 200 mg PAS-Na-Salz 69 % d Th., 76 % d.Th., 78 % d.Th und 77 % d.Th

**Beispiel 4**

4.1 Herstellung einer 80,4 %igen Maleinsäure $(NH_4)_{1,3}$-Salz-Lösung

Die Vorgehensweise ist wie im Beispiel 1.1 dargelegt worden. Eingesetzt werden 39,5 kg Wasser, 75 kg MSA und 16,9 kg Ammoniak-Gas. Es werden 131,4 kg Lösung erhalten Das Temperaturniveau wird aufgrund der konzentrierten Ausführungsform um 10-15°C angehoben. Daher wird das Ammoniumsalz bei 110-115°C in Lösung gehalten.

4.2 Temperung der Lösung

Die Lösung wird 1,5 h bei 110°C getempert.

4.3 Polymerisation der getemperten Lösung

Bei einem Mengenstrom von 20 kg/h wird die Lösung zunächst in einem 8 m langen Vorwärmer auf 215°C erhitzt. Danach wird die Polymerisation in einem 11,5 m langen Wendelrohr bei Temperaturen von 145-215°C durchgeführt Das in Wasser eingeleitete Rohprodukt zeigt folgenden N-Gehalt: Gesamt-N = 131 % d.Th.

4.4 Hydrolyse zum PAS-Na-Salz

Die VSZ für die PAS-Rohproduktlösung beträgt 1,96 mmol/g. Die Hydrolyse wird wie in den vorherigen Beispielen bei 130°C, 3 h und anschließendem Abdestillieren von Ammoniak-Wasser durchgeführt.

4.5 Analyse der PAS-Na-Salz-Lösung

Die PAS-Na-Salz-Lösung zeigt einen Gehalt von 38 Gew.-% aus Kohlenstoff. Gesamt-N = 75 % d.Th. Der CCDK-Wert beträgt 28 mg $CaCO_3$/g PAS-Na-Salz; der ZnO-Gehalt einer wäßrigen Dispersion beträgt beim Einsatz von 20, 50, und 100 mg PAS-Na-Salz 67 % d.Th., 73 % d.Th. und 69 % d.Th.

**Beispiel 5**

Es wird eine 73,6 gew.-%ige $MS(NH_4)_{13}$-Salz-Lösung zur Temperung bei 100°C eingesetzt, wie sie auch schon im Beispiel 3.1 beschrieben wurde. Nach einer Temperung von 3 h wird diese Lösung mit einem Mengenstrom von 30 kg/h zur Polymerisation eingesetzt. Dabei wird die Lösung in einem 8 m langen Vorwärmer auf 235°C erhitzt und anschließend in einem 21 m langen Wendelrohr bei Temperaturen von 185-215°C unter Ausdampfung von Wasser polymerisiert. Das Rohprodukt wird in Waser eingeleitet und zeigt folgenden N-Gehalt: Gesamt-N = 135 % d.Th., Bei einer Verseifungszahl von 1.96 mmol NaOH/g wird die Hydrolyse, wie beschrieben, durchgeführt. Die resultierende 29 %ige PAS-Na-Salz-Lösung zeigt folgende Analyse und Eigenschaften: Gesamt-N = 80 % d.Th., $M_w$ (aus GPC) = 1720; CCDK = 23 mg $CaCO_3$/g; der ZnO-Gehalt beträgt beim Einsatz von 10, 20, 50, 100 und 200 mg PAS-Na-Salz pro 10 g ZnO in einer wäßrigen Dispersion (200 ml Vol.) 66 % d.Th., 82 % d.Th., 83 % d.Th., 84 % d.Th. und 76 % d.Th.

**Beispiel 6**

6.1 Herstellung einer 73,6 %igen Maleinsäure $(NH_4)_{1-3}$-Salz-Lösung

Die Herstellung erfolgt, wie in Beispiel 3.1 beschrieben.

6.2 Temperung der Lösung

Die Lösung wird 6 h bei 100°C getempert. Die Analyse ergibt Gesamt-N = 130 % d.Th.

6.3 Polymerisation der getemperten Lösung

Bei einem Mengenstrom von 40 kg/h wird die Lösung zunächst in einem 8 m langen Vorwärmer auf 230°C erhitzt. Danach wird die Polymerisation unter Ausdampfung von Wasser aus dem Reaktionsgemisch bei Temperaturen von 170-205°C in einem 21 m Wendelrohr durchgeführt. Durch das Ausdampfen eines Teils des Lösungs- und Reaktionswassers steigt die Viskosität der flüssigen Masse an. Die Fließfähigkeit des Reaktionsgemisches bleibt aber erhalten. Das heiße Reaktionsgemisch wird zusätzlich in einen auf 100°C erhitzten Extruder geleitet. Es handelte sich dabei um einen sich gleichsinnig drehenden, selbstreinigenden Zweiwellen-Extruder mit einem Querschnitt von 59 mm pro Welle und einer Länge von 1050 mm (derartige Extruder sind bereits im DBP 862 668 von 1944 beschrieben). Die Leistungsaufnahme betrug 6,8 kw bei einer Umdrehungszahl von 130 U/min. Aus dem Extruder wurde ein beige braunes pulveriges bis flockiges Produkt ausgetragen. Es hatte folgende N-Gehalt: Gesamt-N = 111 % d.Th.

6.4 Hydrolyse zum PAS-Na-Salz

Die VSZ des Polysuccinimids beträgt 10,3 mmol NaOH/g. Die Hydrolyse wird wie in den vorherigen Beispielen bei 130°C, 3 h im Autoklav unter anschließendem Abdestillieren von Ammoniakwasser durchgeführt.

6.5 Analyse der PAS-Na-Salz-Lösung

Die PAS-Na-Salz-Lösung zeigt einen Gehalt von 31 Gew.-% aus Kohlenstoff ($C_4$-Einheiten). Gesamt-N = 89 % d.Th., CCDK = 15 mg $CaCO_3$/g PAS-Na-Salz: der ZnO-Gehalt einer wäßrigen Dispersion beträgt beim Einsatz von 20, 50, 100, 200 und 300 mg PAS-Na-Salz 64, 74, 76, 77 und 71 % d Th., $M_w$ (aus GPC) = 2040.

Damit ist nachgewiesen, daß in diesem Beispiel durch den Einsatz eines Extruders ein deutlicher Molmassen-Aufbau erhalten wurde. Das Polymer zeigt im Dispergierverhalten ein breites anwendungstechnisches Profil. Die dispergierende Wirkung besteht auch für zahlreiche andere Pigmente (z.B. Titanoxide, Eisenoxide), Mineralsalze (z.B. Kalziumcarbonat, Magnesiumcarbonat sowie Kalzium- und Magnesiumhydroxide und -oxide) und keramische Pulver.

Die Bestimmung des ZnO-Gehaltes einer wäßrigen Dispersion wurde nach folgender Vorschrift durchgeführt:

1 g der zu untersuchenden Substanz wird in 100 mL destilliertem Wasser gelöst. Der pH der Probe soll 10 betragen und ist nötigenfalls durch Zusatz von 1n Salzsäure oder 1n Natronlauge zu korrigieren. Die so vorbereitete Probe wird in einen 100 mL Meßkolben überführt und mit destilliertem Wasser auf genau 100 mL Stammlösung aufgefüllt.

In einem 250 mL Mischzylinder werden 10,0 g ZnO p.A. (Merck) vorgelegt und mit 140 bis 170 mL Wasser angeschlämmt. Zur Prüfung der Wirksamkeit der genannten Konzentrationen werden folgende Stammlösungsmengen benötigt:

| | |
|---|---|
| 10 | mg in 1 mL Stammlösung |
| 20 | mg in 2 mL Stammlösung |
| 50 | mg in 5 mL Stammlösung |
| 100 | mg in 10 mL Stammlösung |
| 200 | mg in 20 mL Stammlösung |
| 300 | mg in 30 mL Stammlösung |

Das Gemisch wird über 30 Sekunden bei 24 000 $min^{-1}$ mit einem Ultraturrax-Rührer gerührt, der Rührer mit dest. Wasser abgespült, die Suspension auf 200 mL aufgefüllt. Die somit fertige Probensuspension wird dreimal per Hand umgeschüttelt, und 3 Stunden bei Raumtemperatur stehen gelassen.

Anschließend wird mit einer 5 mL Vollpipette bei der 150 mL Marke ein Aliquot entnommen und in einen 50 mL Meßzylinder, in welchem 10 mL 1 n Salzsäure und ca 20 mL Wasser vorgelegt wurden, überführt. Nach Auffüllen des Meßzylinders wird aus diesem ein Aliquot von 10 mL entnommen und bei pH 11 (Ammonium/Ammoniumchloridpuffer) mit 0,1 n EDTA-Lösung gegen Eriochromschwarz T titriert.

Auswertung:

$$\% ZnO = V \cdot t \cdot 16{,}27$$

worin
V = ml EDTA-Lösung
t = Titer der EDTA-Lösung

## Patentansprüche

1. Verfahren zur Herstellung von Polymeren mit wiederkehrenden Succinyl-Einheiten durch Umsetzung von A, einer ungesättigten $C_4$-Dicarbonsäure oder eines Derivates davon mit B, einer Stickstoff liefernden Verbindung in einem ersten diskontinuierlichen Reaktionsschritt bei einer Temperatur zwischen 60 und 250°C und einer Verweilzeit zwischen 1 min und 20 Stunden unter Erhalt eines Reaktionsgemisches, enthaltend wenigstens ein niedermolekulares Reaktionsprodukt aus A und B und anschließende kontinuierliche Zuführung des Reaktionsgemisches in einen kontinuierlich betriebenen Reaktor, Behandlung des Reaktionsgemisches bei einer Temperatur von 140°C bis 350°C unter Erhalt des Polymeren mit wiederkehrenden Succinyl-Einheiten und einem Molekulargewicht $M_w$ >1300 in einem zweiten Reaktionsschritt.

2. Verfahren gemäß Anspruch 1, **dadurch gekennzeichnet, dass** im ersten diskontinuierlichen Reaktionsschritt als Edukt A Maleinsäureanhydrid, Maleinsäure oder ein Gemisch davon und als Edukt B Ammoniak verwendet wird.

3. Verfahren nach wenigstens einem der vorhergehenden Ansprüche, **dadurch gekennzeichnet, dass** die Polymerisation unter Wasserabzug durchgeführt wird.

4. Verfahren nach wenigstens einem der vorhergehenden Ansprüche, **dadurch gekennzeichnet, dass** das erhaltene Produkt im Wesentlichen wiederkehrende Succinimid-Einheiten aufweist.

5. Verfahren nach wenigstens einem der vorhergehenden Ansprüche, **dadurch gekennzeichnet, dass** das Polymer hydrolisiert wird unter Erhalt eines Polymeren mit im Wesentlichen wiederkehrenden Asparaginsäure-Einheiten.

6. Verfahren nach Anspruch 5, **dadurch gekennzeichnet, dass** das Polymer im wesentlichen wiederkehrende Einheiten folgender Struktur oder ein Salz davon aufweist:

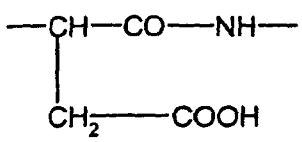

α-Form

und

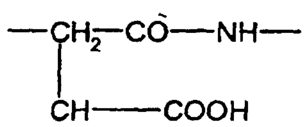

ß-Form

wobei bezogen auf die Summe von α- und β-verknüpften Anteilen, die β-verknüpften Anteile zu mehr als 50 % vorliegen.

7. Verfahren nach wenigstens einem der vorhergehenden Ansprüche, **dadurch gekennzeichnet, dass** der erste Reaktionsschritt bei einer Temperatur zwischen 80 und 150°C, und einer Verweilzeit zwischen 1 min und 20 Stunden durchgeführt wird.

8. Verfahren nach wenigstens einem der vorhergehenden Ansprüche, **dadurch gekennzeichnet, dass** die Polymerisation im zweiten Reaktionsschritt bei einer Temperatur von 120 bis 350°C, insbesondere bei 140°C bis 270°C durchgeführt wird.

9. Verfahren nach wenigstens einem der vorhergehenden Ansprüche, **dadurch gekennzeichnet, dass** der zweite Reaktionsschritt in einem Verweilrohr, Hochviskosreaktor, Trockner, einer Rührkesselkaskade, einem Dünnschichtverdampfer oder einer Mikrowellenapparatur durchgeführt wird.

10. Verfahren nach wenigstens einem der vorhergehenden Ansprüche, **dadurch gekennzeichnet, dass** der zweite Reaktionsschritt in einem Mehrphasen-Wendelrohr durchgeführt wird.

11. Verfahren gemäß wenigstens einem der vorhergehenden Ansprüche, **dadurch gekennzeichnet, dass** die Polymerisation im zweiten Reaktionsschritt so gesteuert wird, dass die erhaltenen Polymere offenkettige Succinyl-Einheiten aufweisen.

12. Verfahren nach wenigstens einem der vorhergehenden Ansprüche, **dadurch gekennzeichnet, dass** die im zweiten Reaktionsschritt erhaltenen Polymere anschließend einer Solvolyse, bevorzugt Hydrolyse unterworfen werden.

13. Verfahren nach wenigstens einem der vorhergehenden Ansprüche, **dadurch gekennzeichnet, dass** die erhaltenen Polymere, gegebenenfalls nach Hydrolyse, im Wesentlichen wiederkehrende Asparaginsäure-Einheiten aufweisen.

14. Verfahren gemäß Anspruch 1, **dadurch gekennzeichnet, dass** man

    a) 0, 1 bis 99,9 mol-% der Edukte A und B
    und zusätzlich

    b) 99,9 bis 0,1 mol% an Fettsäure, Fettsäureamide, mehrbasischen Carbonsäuren, deren Anhydride und Amide, mehrbasische Hydroxycarbonsäuren, deren Anhydride und Amide, Polyhydroxycarbonsäuren, Aminocarbonsäuren, Zuckercarbonsäuren, Alkohole, Polyole, Amine, Polyamine, alkoxylierten Alkohole und Amine, Aminoalkohole, Aminozucker, Kohlehydrate, ethylenisch ungesättigten Mono- und Polycarbonsäuren sowie deren Anhydride und Amide, Proteinhydrolysate z.B. Mais-Proteinhydrolysat, Soja-Proteinhydrolysat, Aminosulfonsäuren und Aminophosphonsäuren entweder mit einem der Hauptedukte vermischt und als Gemisch in die erste Reaktionsstufe einsetzt oder dass man die Verbindungen der Komponente b) dem Reaktionsgemisch bei Durchführung des zweiten Reaktionsschrittes beim Eintritt in den Reaktor zur thermischen Polymerisation zusetzt oder die Verbindungen der Komponente b) simultan mit den Hauptedukten a) beim ersten Reaktionsschritt eindosiert.

**Claims**

1. Process for the preparation of a polymer having recurring succinyl units by reaction of A, an unsaturated $C_4$-dicarboxylic acid or a derivative thereof, with B, a nitrogen-donating compound, in a first discontinuous reaction step at a temperature between 60°C and 250°C over a residence time of between 1 min and 20 hours to give a reaction mixture comprising at least one low molecular weight reaction product of A and B, and subsequent continuous feeding of the reaction mixture into a continuously operating reactor and treatment of the reaction mixture at a temperature of 140 to 350°C to give the polymer having recurring succinyl units and a molecular weight $M_w$ >1300 in a second reaction step.

2. Process according to Claim 1, **characterized in that**, in the first discontinuous reaction step, maleic anhydride, maleic acid or a mixture thereof is used as reactant A and ammonia is used as reactant B.

3. Process according to at least one of the preceding claims, **characterized in that** the polymerization is carried out with removal of water.

4. Process according to at least one of the preceding claims, **characterized in that** the resulting product essentially contains recurring succinimide units.

5. Process according to at least one of the preceding claims, **characterized in that** the polymer is hydrolysed to give a polymer having essentially recurring aspartic acid units.

6. Process according to Claim 5, **characterized in that** the polymer essentially contains recurring units of the following

structure or a salt thereof:

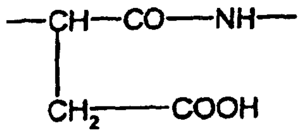

and

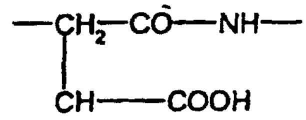

α form β form

the β-linked contents being present to the extent of more than 50 %, based on the sum of α- and β-linked contents.

7. Process according to at least one of the preceding claims, **characterized in that** the first reaction step is carried out at a temperature between 80 and 150°C, over a residence time of between 1 minute and 20 hours.

8. Process according to at least one of the preceding claims, **characterized in that** the polymerization in the second reaction step is carried out at a temperature of 120 to 350°C, in particular at 140°C to 270°C.

9. Process according to at least one of the preceding claims, **characterized in that** the second reaction step is carried out in a delay tube, a high viscosity reactor, a drier, a stirred tank cascade, a thin film evaporator or a microwave apparatus.

10. Process according to at least one of the preceding claims, **characterized in that** the second reaction step is carried out in a multi-phase helical tube.

11. Process according to at least one of the preceding claims, **characterized in that** the polymerization in the second reaction step is controlled such that the resulting polymer contains open-chain succinyl units.

12. Process according to at least one of the preceding claims, **characterized in that** the polymer obtained in the second reaction step is subsequently subjected to solvolysis, preferably hydrolysis.

13. Process according to at least one of the preceding claims, **characterized in that** the resulting polymers, where appropriate after hydrolysis, essentially contain recurring aspartic acid units.

14. Process according to Claim 1, **characterized in that**

a) 0.1 to 99.9 mol% of the reactants A and B
and additionally

b) 99.9 to 0.1 mol% of fatty acid, fatty acid amides, polybasic carboxylic acids, anhydrides and amides thereof, polybasic hydroxycarboxylic acids, anhydrides and amides thereof, polyhydroxycarboxylic acids, aminocarboxylic acids, sugar-carboxylic acids, alcohols, polyols, amines, polyamines, alkoxylated alcohols and amines, amino-alcohols, amino-sugars, carbohydrates, ethylenically unsaturated mono- and polycarboxylic acids and anhydrides and amides thereof, protein hydrolysates, for example maize protein hydrolysate, soya protein hydrolysate, aminosulfonic acids and aminophosphonic acids are either mixed with one of the main reactants and used as a mixture in the first reaction step or **in that** the compounds of component b) are added to the reaction mixture when carrying out the second reaction step on entry into the reactor for thermal polymerization or the compounds of component b) are metered simultaneously with the main reactants a) in the first reaction step.

**Revendications**

1. Procédé de préparation de polymères à unités succinyle récurrentes, par réaction de A, un acide dicarboxylique insaturé en $C_4$ ou un dérivé de celui-ci, avec B, un composé procurant un atome d'azote, dans une première étape de réaction discontinue à une température allant de 60 à 250°C et avec un temps de séjour allant de 1 minute à

20 heures avec obtention d'un mélange réactionnel, contenant au moins un produit de réaction de A et de B, de faible poids moléculaire, et ensuite apport continu du mélange réactionnel dans un réacteur fonctionnant en continu, traitement du mélange réactionnel à une température allant de 140°C à 350°C avec obtention du polymère avec unités succinyle récurrentes et avec un poids moléculaire $M_w$ > 1300, dans une deuxième étape de réaction.

**2.** Procédé suivant la revendication 1, **caractérisé en ce que** dans la première étape discontinue de réaction, on utilise comme réactif A, l'anhydride maléique, l'acide maléique ou un mélange de ceux-ci et l'ammoniac comme réactif B.

**3.** Procédé suivant au moins une des revendications précédentes, **caractérisé en ce que** la polymérisation est réalisée avec extraction d'eau.

**4.** Procédé suivant au moins une des revendications précédentes, **caractérisé en ce que** le produit obtenu présente essentiellement des unités succinimide récurrentes.

**5.** Procédé suivant au moins une des revendications précédentes, **caractérisé en ce que** le polymère est hydrolysé avec obtention d'un polymère essentiellement avec des unités acide aspartique récurrentes.

**6.** Procédé suivant la revendication 5, **caractérisé en ce que** le polymère présente essentiellement, les unités récurrentes de la structure suivante ou un sel de celles-ci :

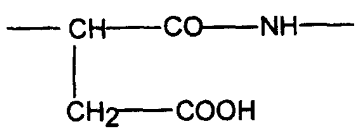

Forme α

et

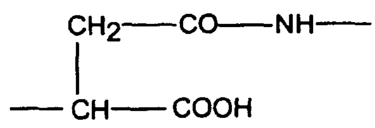

Forme β

où sur base de la somme des parties reliées en α et en β, les parties reliées en β sont présentes à plus de 50%.

**7.** Procédé suivant au moins une des revendications précédentes, **caractérisé en ce que** la première étape de réaction est réalisée à une température allant de 80 à 150°C, et avec un temps de séjour allant de 1 minute à 20 heures.

**8.** Procédé suivant au moins une des revendications précédentes, **caractérisé en ce que** la polymérisation dans la deuxième étape de réaction est réalisée à une température allant de 120 à 350°C, en particulier de 140°C à 270°C.

**9.** Procédé suivant au moins une des revendications précédentes, **caractérisé en ce que** la deuxième étape de réaction est réalisée dans un tube de séjour, un réacteur très visqueux, un séchoir, une cascade de réacteurs agités, un évaporateur en couche mince ou un appareil à micro-ondes.

**10.** Procédé suivant au moins une des revendications précédentes, **caractérisé en ce que** la deuxième étape de réaction est réalisée dans un tube hélicoïdal polyphasique.

**11.** Procédé suivant au moins une des revendications précédentes, **caractérisé en ce que** la polymérisation dans la deuxième étape de réaction est réglée de sorte que le polymère obtenu présente des unités succinyle à chaîne ouverte.

**12.** Procédé suivant au moins une des revendications précédentes, **caractérisé en ce que** le polymère obtenu dans la deuxième étape de réaction est ensuite soumis à une solvolyse, de préférence une hydrolyse.

**13.** Procédé suivant au moins une des revendications précédentes, **caractérisé en ce que** le polymère obtenu, le cas échéant après hydrolyse, présente essentiellement des unités acide aspartique récurrentes.

**14.** Procédé suivant la revendication 1, **caractérisé en ce que** l'on mélange

a) 0,1 à 99,9% en moles des réactifs A et B, et en outre
b) 99,9 à 0,1% en moles d'acides gras, amides d'acide gras, acides carboxyliques polybasiques, leurs anhydrides et amides, acides hydroxycarboxyliques polybasiques, leurs anhydrides et amides, poly(acides hydroxycarboxyliques), acides aminocarboxyliques, acides carboxyliques de sucre, alcools, polyols, amines, polyamines, alcools et amines alcoxylés, aminoalcools, aminosucres, hydrates de carbone, acides mono- et polycarboxyliques éthyléniquement insaturés, ainsi que leurs anhydrides et amides, hydrolysats de protéines, par exemple hydrolysats de protéines de maïs, hydrolysates de protéines de soja, acides aminosulfoniques et acides aminophosphoniques, avec les réactifs principaux et on met en oeuvre comme mélange dans la première étape de réaction ou **en ce que** l'on ajoute les composés du composant b) au mélange réactionnel lors de la réalisation de la deuxième étape de réaction lors de l'entrée dans le réaction pour la polymérisation thermique ou les composés du composant b) sont ajoutés simultanément aux réactifs principaux a) dans la première étape de réaction.